# EUROPEAN PATENT SPECIFICATION

(11) **EP 4 243 388 B1**
(45) Date of publication and mention of the grant of the patent: **06.11.2024**
(21) Application number: 23158783.3
(22) Date of filing: 27.02.2023
(51) Int. Cl.: H04M 1/10, H04M 1/02, H04M 11/02, H04N 7/18

(54) **INDOOR UNIT FOR AN INTERCOM SYSTEM**
INNENEINHEIT FÜR EINE GEGENSPRECHANLAGE
UNITÉ INTÉRIEURE POUR UN SYSTÈME D'INTERPHONE

(30) Priority: 07.03.2022 IT 202200004253
(43) Date of publication of application: 13.09.2023
(73) Proprietor: Comelit Group S.p.a., 24020 Rovetta San Lorenzo (BG) (IT)
(72) Inventor: NICOLI, Sergio, 24022 Alzano Lombardo (BG) (IT); GATTI, Guido Giulio Vittorio, 24121 Bergamo (IT); MORANDI, Luca, 24123 Bergamo (IT)
(74) Representative: Mati, Silvia

(56) References cited:
- EP-A1- 1 343 299
- EP-B1- 3 404 903
- CH-A5- 677 051

## Description

### TECHNICAL FIELD

The present invention refers to the field of intercom systems, in particular to an indoor unit for an intercom system.

### BACKGROUND ART

The intercom and video intercom systems, which are widely known by themselves, are configured to allow communication between different units, usually fixed, arranged within a building. In particular, in its most usual form, the intercom system comprises at least one common device (hereinafter referred to as "outdoor unit"), set up outside the building or in any case in a freely accessible area and a plurality of devices (briefly referred to as "indoor units") installed inside the building. For the indoor units of the intercom systems, the configuration that provides a base and a removable handset for communication is widely known. In a manner known per se, the base comprises a seat for the handset and a sensor configured for detecting the presence of the handset in the seat.

When an indoor unit detects that its handset is hung up to its seat, the indoor unit is in a "standby" configuration. When all the indoor units of a system detect that their handsets are hung up to their respective seats, the system is in a "free" configuration, that is, it is ready to start communication between the outdoor unit and any of the indoor units. In other words, if a user accesses the outdoor unit, he can send a call to any indoor unit, which will activate its own ringtone to signal the incoming call. If a user accesses the indoor unit that has received the call and picks up the handset to answer the call, the indoor unit switches into the "working" configuration. If any indoor unit switches into a working configuration, the system as a whole switches into a "busy" configuration and momentarily prevents any other communication.

The indoor units are usually configured for being mounted on the wall, in an upright position. For this reason, the seat usually comprises one or more hooks that allow the handset to be kept in the correct position inside its seat and prevent it from falling by gravity.

In the indoor units of the prior art, two different types of sensor are commonly employed to detect the presence of the handset. A first sensor is of a mechanical type and comprises a button, movable under the effect of a spring, which protrudes inside the seat of the handset. When the handset is picked up from its seat, it frees the button which, since it is pushed by the spring, moves and closes a circuit; in this way communication with the system and in particular with the outdoor unit is activated. The indoor unit switches into the working configuration and the entire system switches into the busy configuration. Conversely, when the handset is hung up back in its seat, it pushes the button against the action of the spring. In this way the circuit is opened again, interrupting communication and moving the indoor unit to the standby configuration and the entire system to the free configuration.

A different solution envisages using a Hall sensor, configured for detecting the presence of a magnet provided in the handset. When the handset is picked up from its seat, the magnet moves away from the Hall sensor and this closes the circuit activating the communication. Conversely, when the handset is hung up back in its seat, the magnet is again brought closer to the Hall sensor that opens the circuit again, interrupting communication.

Although widely appreciated, indoor units of known type are not without disadvantages. In fact, in both known solutions, they are subject to relatively frequent malfunctions.

In the indoor units using the mechanical type sensor, it may happen that at the end of the conversation the repositioning of the handset is not correctly detected. In fact, it may happen that the user hangs the handset up in an incorrect way, but that the appropriate hooks still hold the handset in its seat, albeit in a precarious way. In this case, the user does not notice anything, but the button of the mechanical sensor is not pushed correctly and the circuit of the unit remains closed. The entire system thus remains in a busy configuration, preventing any further communication.

On the contrary, in the indoor units using the Hall sensor, it may happen that the removal of the handset is not correctly detected. This malfunction is relatively frequent and can result for example from electromagnetic interferences due to other devices present near the indoor unit. This type of malfunction implies that the circuit remains open even when it should be closed upon removal of the handset from the seat. Failure to close the communication circuit implies two different problems. Firstly, it does not allow any communication between the outdoor unit and the indoor unit. Furthermore, in the absence of a response, a second call is likely to be generated by the outdoor unit. Since the user of the indoor unit cannot immediately notice the malfunction, he is induced to keep the handset close to his ear. The indoor unit often uses the loudspeaker of the handset as a ringtone, the user therefore risks receiving the second call with the handset resting on the ear, suffering a strong discomfort.

The need is therefore felt to set up an indoor intercom unit that allows to prevent these malfunctions.

### OBJECTS AND SUMMARY OF THE INVENTION

Aim of the present invention is to overcome the drawbacks of the prior art.

In particular, a task of the present invention is to make available an indoor unit for an intercom system that allows to immediately make evident to the user the possible incorrect positioning of the handset.

Furthermore, a task of the present invention is to make available an intercom system that allows to avoid the continuation of the busy configuration beyond the desired time.

These and other objects and tasks of the present invention are achieved by an indoor unit for an intercom system and an intercom system incorporating the features of the appended claims, which form an integral part of the present disclosure.

In accordance with a first aspect, the invention concerns an indoor unit for an intercom system comprising:
- a handset comprising a magnetically active element; and
- a base comprising a switch for opening/closing a communication circuit, wherein the base defines a seat configured for housing the handset.

Furthermore, in the indoor unit of the invention:
- the seat comprises a magnetically active element arranged at the magnetically active element of the handset when the handset is placed in the seat;
- the magnetically active element of the base is movable between two positions and is configured for opening/closing the switch; and
- the interaction between the magnetically active element of the base and the magnetically active element of the handset is suitable for constraining the handset in its seat.

Thanks to the particular structure of the indoor unit of the invention, the user immediately notices if the handset is not correctly hung up in the seat, because in this case the correct interaction between the two magnetically active elements is not established and the handset is not stable in its seat.

Preferably the seat is configured for housing the handset in a predefined position.

The presence of a predefined position of the handset in the seat helps the user in correctly hanging up the handset, thus ensuring that the two magnetically active elements approach each other, so as to establish the correct interaction between them.

In accordance with some embodiments, the seat defines a longitudinal axis *l*, a transversal axis *t* and an axis *a* of approach/removal of the handset, wherein *l*, *t* and *a* are perpendicular to each other.

Preferably the seat defines a shape constraint preventing the handset from translating in the directions of axes *l* and t, when the handset is placed in the seat, preferably in the predefined position. Advantageously, the shape constraint allows the handset to translate in the direction of axis *a*, when the handset is placed in the seat.

This shape constraint allows to very precisely define the predefined position of the handset in the seat, while allowing the user to easily remove the handset.

Preferably the interaction between the magnetically active element of the base and the magnetically active element of the handset is suitable for constraining the handset in the direction of approach/removal of the handset with respect to the base, when the handset is placed in the seat, preferably in the predefined position.

Preferably the magnetically active element of the base is configured for mechanically acting on the switch.

This solution makes it possible to avoid the typical malfunctions of the Hall sensors of the prior art.

Preferably the magnetically active element of the base is configured for moving due to interaction with a second magnetically active element outside of the base. Typically the magnetically active element of the base moves due to interaction with the magnetically active element of the handset.

Preferably the magnetically active element of the base acts on the switch through the interposition of a kinematic mechanism. The presence of the kinematic mechanism allows to place the switch more freely inside the base and/or to modulate force and displacement differently from how they are achieved by the magnetically active element.

In a second aspect, the invention concerns an intercom system comprising at least one outdoor unit and at least one indoor unit in accordance with what is described above.

Further features and advantages of the present invention will be more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate. Moreover, for clarity of illustration, certain references may not be repeated in all drawings.

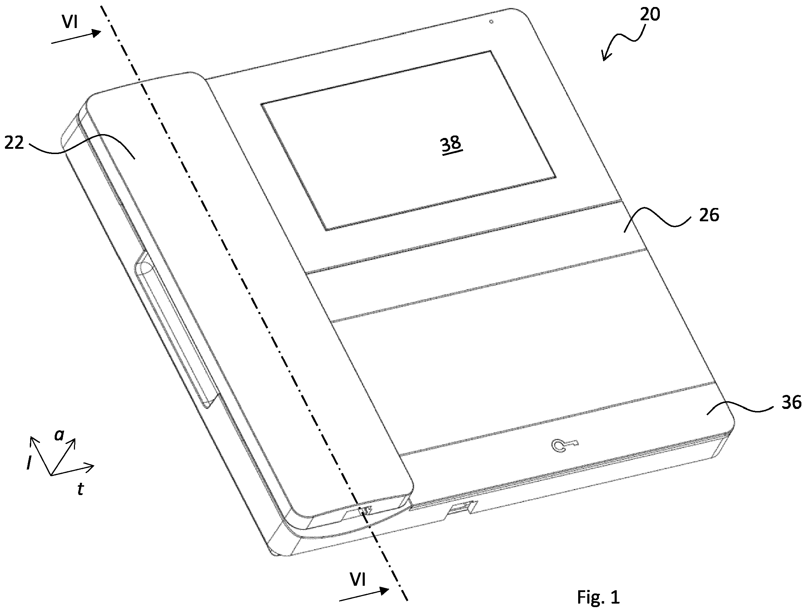

Figure 1 is an axonometric view of an indoor unit for an intercom system in accordance with the invention in a standby configuration (system in free configuration);
Figure 2 is a view of the indoor unit of Figure 1 in a working configuration (system in busy configuration);
Figure 3 is a schematic front view of the unit of Figure 2, in which the handset has been turned upside down with respect to Figure 2;
Figure 4 is a schematic view of an indoor unit in accordance with the invention, in standby configuration;
Figure 5 is a schematic view of the unit of Figure 4, in working configuration;
Figure 6 shows the section operated along trace VI-VI of Figure 1;
Figure 7 is an enlarged view of the detail indicated with VII in Figure 6, in which the handset has been removed for clarity's sake;
Figure 8 is an enlarged view of the detail indicated with VIII in Figure 6, in which the handset has been removed for clarity's sake;
Figure 9 is an enlarged view of the detail indicated with IX in Figure 6;
Figure 10 is a view similar to that of Figure 9, in which the indoor unit is in working configuration;
Figure 11 is an axonometric view of the back of the unit of Figure 1, in which the unit is in working configuration and in which some elements have been removed for clarity's sake;
Figure 12 is an enlarged view of the detail indicated with XII in Figure 11; and
Figure 13 is a view similar to that of Figure 12, in which the unit is in standby configuration; and
Figure 14 is a schematic view of an intercom system in accordance with the invention.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

The invention is intended to be used in the presence of acceleration due to gravity g. In the following discussion, it is understood that the acceleration due to gravity g unambiguously defines the vertical direction and, consequently, the horizontal directions. Furthermore, the terms "high", "above", "upper" and the like are considered to be uniquely defined in relation to the terms "low", "below", "lower" and the like, based on the acceleration due to gravity g .

In accordance with a first aspect, the invention concerns an indoor unit for an intercom system, indicated with 20 in the accompanying figures. The indoor unit 20 in accordance with the invention comprises:
- a handset 22 comprising a magnetically active element 24; and
- a base 26 comprising a switch 28 for opening/closing a communication circuit 30, wherein the base 26 defines a seat 32 configured for housing the handset 22.

Furthermore, in the indoor unit 20 of the invention:
- the seat 32 comprises a magnetically active element 34 arranged at the magnetically active element 24 of the handset 22 when the handset 22 is placed in the seat 32;
- the magnetically active element 34 of the base 26 is movable between two positions and is configured for opening/closing the switch 28; and
- the interaction between the magnetically active element 34 of the base 26 and the magnetically active element 24 of the handset 22 is suitable for constraining the handset 22 in its seat 32.

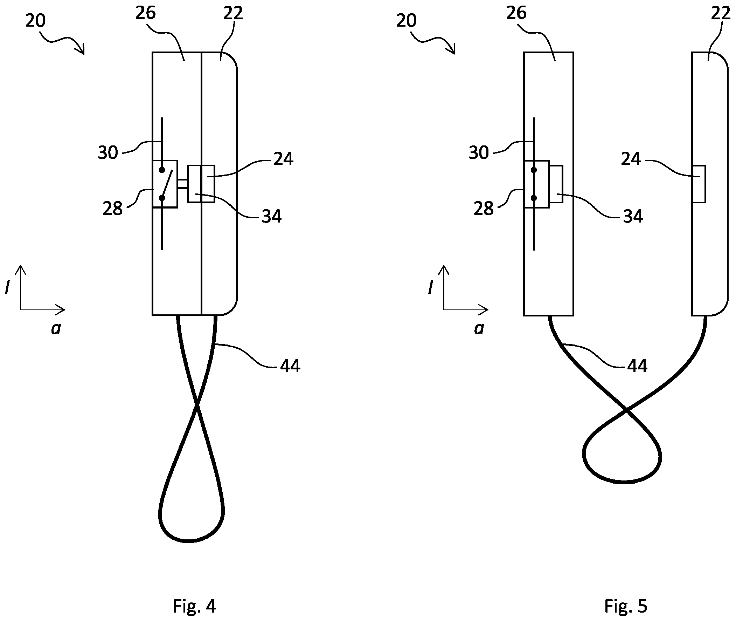

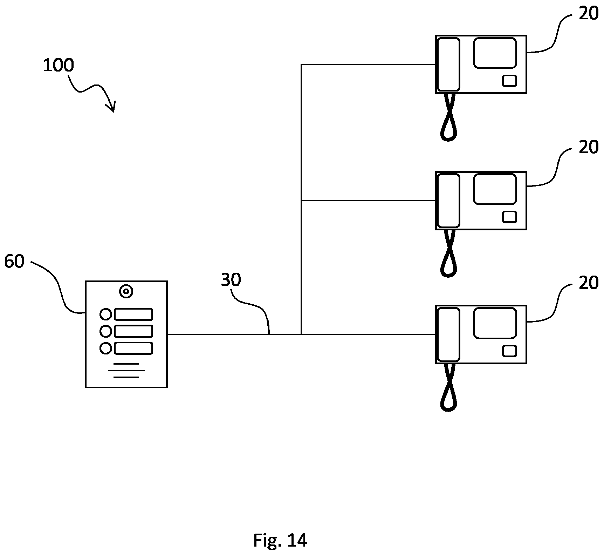

Preferably the indoor unit 20 in accordance with the invention also comprises other elements well known to the skilled person. Such elements will be described only briefly below because they are not closely related to the structure and operation of the invention. For example, the base 26 may advantageously comprise one or more of the following elements: a connection to a communication circuit 30 of an intercom system 100, one or more door opener buttons 36, a screen 38 for reproducing a video signal, one or more auxiliary operating devices such as buttons for turning on lights (not shown). Still, the handset 22 advantageously comprises a microphone 40 and a loudspeaker 42 for audio communication. The handset 22 and the base 26 are preferably connected together by a cable 44; Figures 4, 5 and 14 schematically show the cable 44, while in the other figures the cable 44 is not shown for simplicity's sake. In accordance with other embodiments, the handset 22 and the base 26 may be connected together by a wireless communication system. Still, the indoor unit 20 advantageously comprises a ringtone which, depending on the embodiments, can be placed in the base 26 or can exploit the loudspeaker 42 of the handset 22.

In accordance with some embodiments, both the magnetically active elements 24, 34, that of the handset 22 and that of the base 26, are magnets, preferably permanent magnets. In accordance with other embodiments, only one of the two magnetically active elements 24, 34, or that of the handset 22 or that of the base 26, is a magnet, preferably a permanent magnet, while the other magnetically active element is a ferromagnetic mass.

Advantageously the magnetically active element 34 of the base 26 is movable between a standby position in which it keeps the switch 28 open, and a working position in which it closes the switch 28. Preferably the magnetically active element 34 of the base 26 is configured for mechanically acting on the switch 28, through its movement. In particular, the magnetically active element 34 of the base 26 is configured for moving from the working position to the standby position thanks to the interaction with a second magnetically active element external to the base 26, typically the magnetically active element 24 of the handset 22.

Preferably, the magnetically active element 34 of the base 26 comprises a recall element (not visible in the figures) which tends to bring it from the standby position to the working position.

The magnetically active element 34 of the base 26 acts mechanically on the switch 28 and can act directly as schematically shown in Figures 4 and 5, or it can act through the interposition of a kinematic mechanism 46, for example to allow a freer placement of the switch 28 in the base 26, or to vary the extent of the force and of the displacement with respect to those obtained directly by the magnetically active element 34 of the base 26.

In accordance with the embodiments of the invention shown in the accompanying figures, the magnetically active element 34 of the base 26 acts on the switch 28 through a double rocker kinematic mechanism 46 which will be described in greater detail below.

As the skilled person can well understand, when the handset 22 is correctly hung up in its seat 32, the magnetically active element 24 of the handset 22 attracts the magnetically active element 34 of the base 26 to itself, bringing it into the standby position and keeping the switch 28 open (see in this regard the diagram of Figure 4). When, on the other hand, the handset 22 is removed from the seat 32, and therefore in the absence of magnetic interaction, the action of the recall element spontaneously returns the magnetically active element 34 of the base 26 to the working position, closing the switch 28 (see in this regard the diagram of Figure 5).

The recall element preferably exploits a form of energy storage in potential form. By way of example, the recall element may comprise a spring or a mechanism actuated by a mass exerting the recall action by gravity.

The switch 28 for opening/closing a communication circuit 30, arranged in the base 26, causes the passage of the indoor unit 20 from the standby configuration to the working configuration and vice versa. Consequently, the same switch 28 causes the passage of the entire intercom system 100 from the free configuration to the busy configuration.

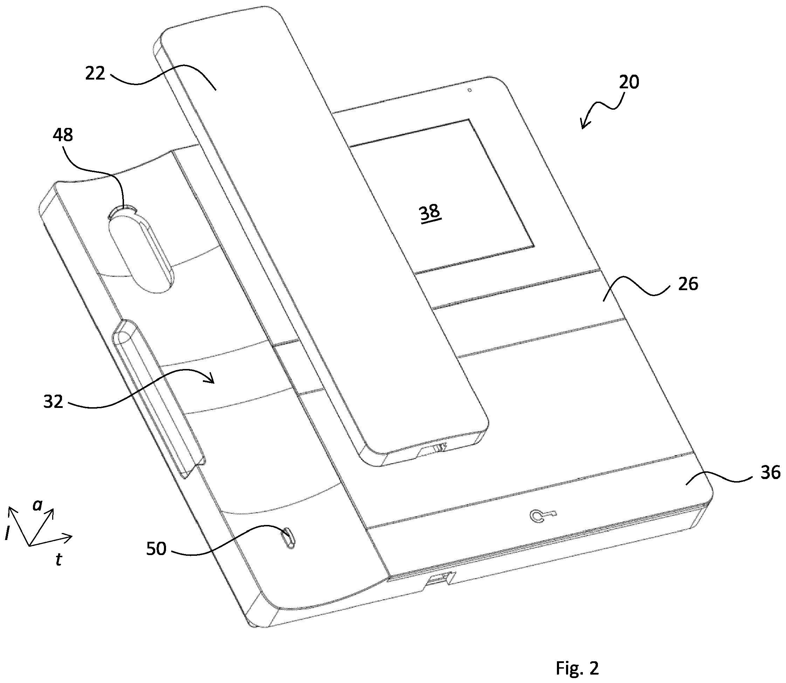

Preferably the seat 32 is configured for housing the handset 22 in a predefined position. In some embodiments, the seat 32 defines a longitudinal axis *l*, a transversal axis *t* and an axis *a* of approach/removal of the handset 22, wherein *l*, *t* and *a* are perpendicular to each other (see in this regard Figure 2).

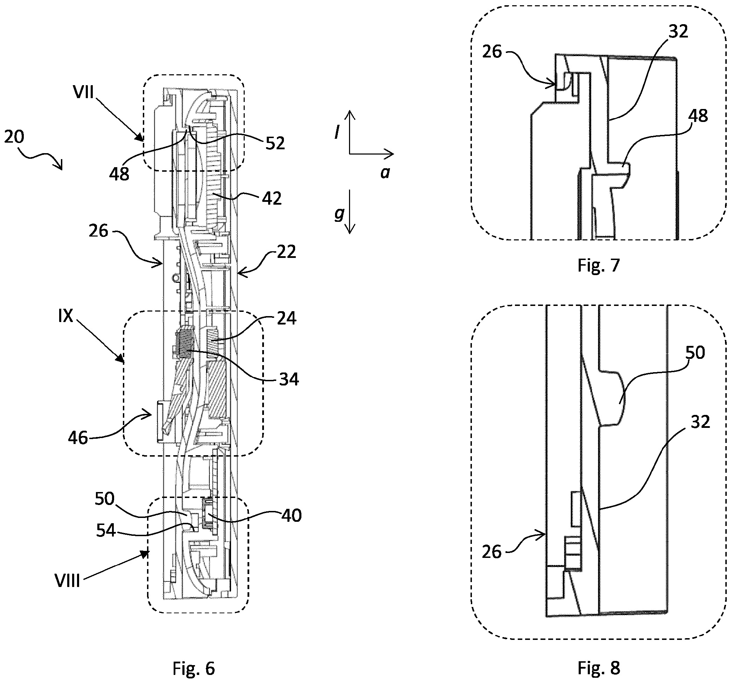

The indoor unit 20 of the invention is intended to be installed, preferably in a fixed manner, with the axis *t* substantially horizontal, i.e. horizontal except for the unavoidable assembly inaccuracies. In most cases, the indoor unit 20 of the invention is installed with the axis *l* substantially vertical, i.e. vertical except for the unavoidable assembly inaccuracies (see for example Figure 6). This configuration, which is obtained with the wall installation, is certainly the most common, but nothing prevents installing the indoor unit 20 of the invention with the axis *l* deliberately inclined with respect to the vertical, for example with installation on a console, or even with the horizontal axis *l*, for example with installation on a table.

Preferably, the seat 32 defines a shape constraint that prevents the handset 22 from translating in the directions of axes *l* and *t*, when the handset 22 is placed in the seat 32. In accordance with some embodiments, the shape constraint allows the handset 22 to translate in the direction of axis *a*, when the handset 22 is placed in the seat 32. In these embodiments, it is the interaction between the magnetically active element 34 of the base 26 and the magnetically active element 24 of the handset 22 that constrains the handset 22 in the direction of axis *a* (i.e. in the direction of approach/removal of the handset 22 with respect to the base 26), when the handset 22 is placed in the seat 32.

The shape constraint between the seat 32 and the handset 22 may be defined in different ways depending on the embodiments. Typically, the seat 32 can assume a shape at least partially complementary to that of the handset 22, such that the handset 22 can be inserted into the seat 32 with a translation along axis *a*.

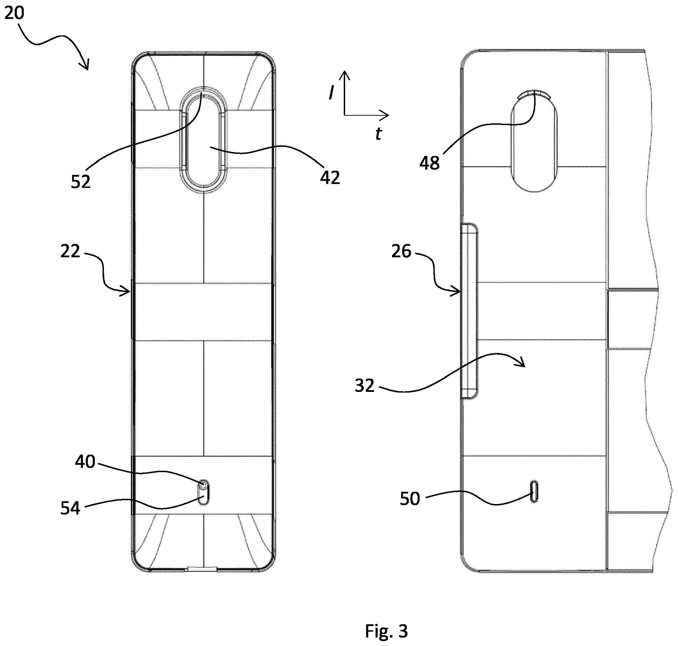

In accordance with the embodiment of the invention represented in Figures 3 and 6-8, the shape constraint is partially defined by an upper shelf 48 and by a lower protrusion 50, both provided in the seat 32. The upper shelf 48 has a shape complementary to a slot 52 provided in the handset 22. In the specific case, the upper shelf 48 has a shape complementary to the slot 52 provided in the handset 22 at the loudspeaker 42. The lower protrusion 50 has a shape complementary to a recess 54 provided in the handset 22. In this specific case, the lower protrusion 50 has a shape complementary to the recess 54 provided in the handset 22 at the microphone 40.

As can be noted from the accompanying figures, in particular from Figures 7 and 8, the particular shape of the upper shelf 48 and of the lower protrusion 50, cause that, when the handset 22 is arranged in the seat 32, by cooperating respectively with the slot 52 and with the recess 54 of the handset 22, a shape constraint is generated that prevents the handset 22 from translating in the directions of axes *l* and *t*, and that allows the handset 22 to translate in the direction of axis *a*.

As the skilled person can well understand, however, the absence of any constraint in the direction of axis *a* introduces an instability of the positioning of the handset 22 in its seat 32. In fact, if the shape constraint prevents the translations along axes *l* and *t*, it cannot prevent the rotations, in particular a rotation with respect to an axis parallel to t and passing through the lower end of the handset 22.

If the indoor unit 20 is mounted on the wall (with vertical axis *l*), this rotation is induced by force of gravity, because the centre of mass of the handset 22 is far from the seat 32 in the direction of axis *a* and therefore a momentum is generated. A small rotation of this type immediately detaches the handset 22 from the upper shelf 48 causing it to fall. The instability described is solved by the action of the magnetically active elements 24, 34. In fact, as mentioned above, the interaction between the magnetically active element 34 of the base 26 and the magnetically active element 24 of the handset 22 is suitable for constraining the handset 22 in its seat 32.

As the skilled person can well understand, the magnetically active elements 24, 34 are configured in such a way that their mutual interaction generates a force that on the one hand is sufficient to constrain the handset 22 in its seat 32 and on the other hand can be easily overcome by the action of the user at the moment in which he wants to remove the handset 22 from the seat 32.

Note that the same magnetic interaction that constrains the handset 22 in its seat 32 also moves the magnetically active element 34 of the base 26 such that it acts on the switch 28. In particular, when the handset 22 is correctly hung up in the seat 32, the two magnetically active elements 24, 34 attract each other with the dual effect of keeping the switch 28 open and of keeping the handset 22 in place (Figure 4). Conversely, when the handset 22 is removed from the seat 32, the two magnetically active elements 24, 34 no longer interact with each other and the switch 28 is closed (Figure 5).

Thanks to this particular structure of the indoor unit 20 of the invention, the user immediately notices if the handset 22 is not correctly hung up in the seat 32, because in this case there is no correct interaction between the two magnetically active elements 24, 34 and the handset 22 is not stable in its seat 32. In the widely more common case in which the axis *l* is substantially vertical, in the absence of the interaction between the two magnetically active elements 24, 34 the handset 22 falls under the action of gravity, indicating very clearly to the user that the indoor unit 20 is still in a working configuration and that therefore the system 100 remains in a busy configuration.

The dual rocker kinematic mechanism 46 and its operation are described below with particular reference to Figures 6 and 9-13. A first rocker 56 holds the magnetically active element 34 of the base 26 at a first end and, at the second end, opposite the first with respect to the oscillation axis, carries an actuator which is configured for acting on the second rocker 58. The second rocker 58, operated at a first end by the first rocker 56, acts through the second end on the switch 28.

In these embodiments, the recall element may comprise one or more springs placed along the kinematic mechanism 46. For example, a torsional spring may be provided around the oscillation axis of the first rocker 56, in addition or alternatively a torsional spring may be provided around the oscillation axis of the second rocker 58, in addition or alternatively a spring may be provided which acts on the switch 28 pushing it towards the working configuration.

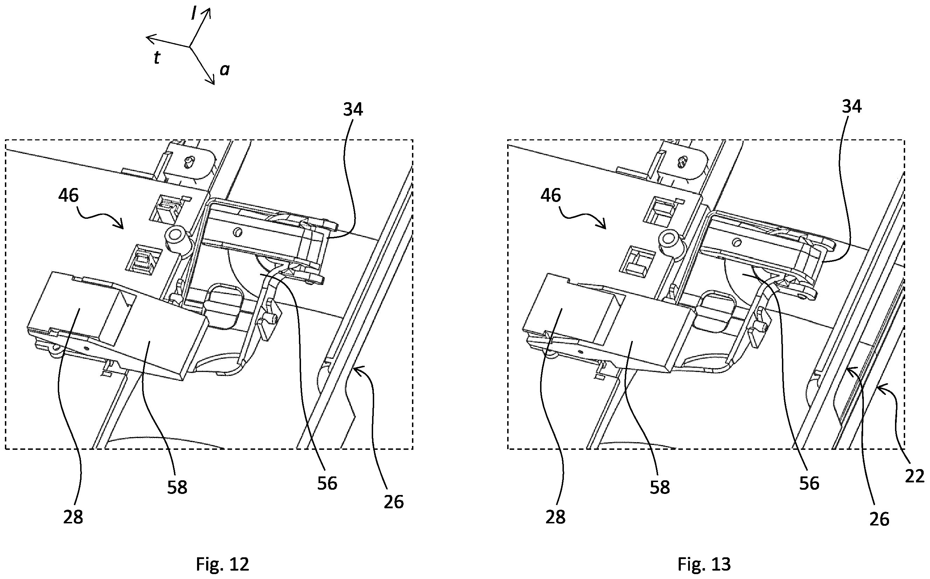

When the handset 22 is correctly hung up in its seat 32, the two magnetically active elements 24, 34 interact with each other moving as closely as possible, as shown in Figures 6, 9 and 13. In this configuration, the magnetically active element 34 of the base 26 is retained in the standby position and the concatenated action of the two rockers 56, 58 acts on the switch 28 while also keeping it in the standby configuration (Figure 13).

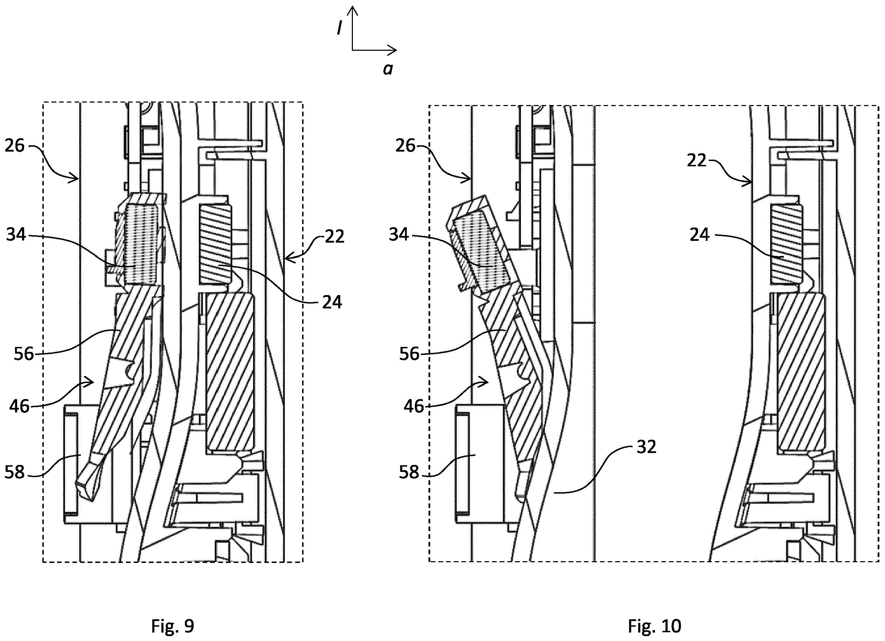

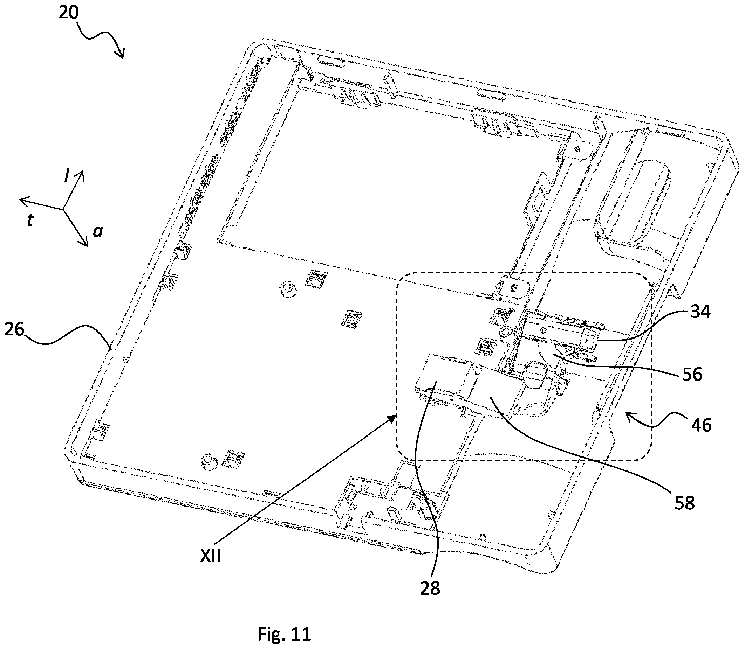

When instead the handset 22 is removed from the seat 32 (compare Figure 9 and Figure 10) the interaction between the magnetically active elements 24, 34 is interrupted and therefore the recall element brings the magnetically active element 34 of the base 26 into the working position (Figure 10). Consequently, the concatenated action of the two rockers 56, 58 acts on the switch 28 also bringing it into the working configuration (Figures 11 and 12).

In accordance with a second aspect, the invention concerns an intercom system 100 comprising at least one outdoor unit 60 and at least one indoor unit 20 in accordance with what is described above.

Within the scope of this discussion, only the technical characteristics of the indoor unit 20 and of the system 100 that are closely related to the invention have been described in depth. As the skilled person can well understand, for all the other technical characteristics, by themselves widely known, of the system 100, of the indoor unit 20 and of the outdoor unit 60, the description given in the introductory part of this discussion with reference to the solutions of the prior art remains valid.

As the person skilled can well understand, the invention overcomes the drawbacks highlighted above in relation to the prior art.

In particular, the invention provides an indoor unit 20 for an intercom 100 system 100 that allows to immediately make evident to the user the possible incorrect positioning of the handset 22.

Furthermore, the invention makes available an intercom system 100 that allows to avoid the continuation of the busy configuration beyond the desired time.

In practice, the materials used, as well as the contingent shapes and sizes, can be whatever according to the requirements without for this reason departing from the scope of protection of the following claims.

## Claims

1. Indoor unit (20) for an intercom system (100), comprising:
- a handset (22) comprising a magnetically active element (24); and
- a base (26) comprising a switch (28) for opening/closing a communication circuit (30), wherein the base (26) defines a seat (32) configured for housing the handset (22), wherein:
- the seat (32) comprises a magnetically active element (34) arranged at the magnetically active element (24) of the handset (22) when the handset (22) is placed in the seat (32);
wherein the magnetically active element (34) of the base (26) is movable between two positions and is configured for opening/closing the switch (28);
and wherein the interaction between the magnetically active element (34) of the base (26) and the magnetically active element (24) of the handset (22) is suitable for constraining the handset (22) in its seat (32).

2. Indoor unit (20) according to claim 1, wherein the seat (32) is configured for housing the handset (22) in a predefined position.

3. Indoor unit (20) according to claim 1 or 2, wherein the seat (32):
- defines a longitudinal axis *l*, a transversal axis *t* and an axis *a* of approach/removal of the handset (22), *l*, *t* and *a* being perpendicular to each other; and
- defines a shape constraint preventing the handset (22) from translate in the directions of axes *l* and *t*, when the handset (22) is placed in the seat (32).

4. Indoor unit (20) according to claim 3 wherein the shape constraint allows the handset (22) to translate in the direction of axis *a*, when the handset (22) is placed in the seat (32).

5. Indoor unit (20) according to one or more of the preceding claims, wherein the interaction between the magnetically active element (34) of the base (26) and the magnetically active element (24) of the handset (22) is suitable for constraining the handset (22) in the direction of approach/removal of the handset (22) with respect to the base (26), when the handset (22) is placed in the seat (32).

6. Indoor unit (20) according to one or more of the preceding claims, wherein the magnetically active element (34) of the base (26) is configured for mechanically acting on the switch (28).

7. Indoor unit (20) according to one or more of the preceding claims, wherein the magnetically active element (34) of the base (26) is configured for moving due to interaction with a second magnetically active element outside of the base (26).

8. Indoor unit (20) according to one or more of the preceding claims, wherein the magnetically active element (34) of the base (26) acts on the switch (28) through the interposition of a kinematic mechanism (46).

9. Intercom system (100) comprising at least one outdoor unit (60) and at least one indoor unit (20) according to one or more of the preceding claims.

## Patentansprüche

1. Inneneinheit (20) für eine Gegensprechanlage (100), umfassend:
- einen Handapparat (22) mit einem magnetisch aktiven Element (24); und
- eine Basis (26) mit einem Schalter (28) zum Öffnen/Schließen einer Kommunikationsschaltung (30), wobei die Basis (26) einen Sitz (32) definiert, der zur Aufnahme des Handapparates (22) eingerichtet ist, wobei:
- der Sitz (32) ein magnetisch aktives Element (34) umfasst, das an dem magnetisch aktiven Element (24) des Handapparats (22) angeordnet ist, wenn der Handapparat (22) in dem Sitz (32) platziert wird;
wobei das magnetisch aktive Element (34) der Basis (26) zwischen zwei Positionen beweglich ist und zum Öffnen/Schließen des Schalters (28) eingerichtet ist; und wobei die Wechselwirkung zwischen dem magnetisch aktiven Element (34) der Basis (26) und dem magnetisch aktiven Element (24) des Handapparates (22) geeignet ist, den Handapparat (22) in seinem Sitz (32) festzuhalten.

2. Inneneinheit (20) nach Anspruch 1, wobei der Sitz (32) zur Aufnahme des Handapparates (22) in einer vordefinierten Position ausgebildet ist.

3. Inneneinheit (20) nach Anspruch 1 oder 2, wobei der Sitz (32):
- eine Längsachse *l*, eine Querachse *t* und eine Achse a der Annäherung/Entfernung des Handapparats (22) definiert, wobei *l*, *t* und a senkrecht zueinander stehen; und
- eine Formbegrenzung definiert, die den Handapparat (22) daran hindert, sich in den Richtungen der Achsen *l* und *t* zu verschieben, wenn der Handapparat (22) in dem Sitz (32) platziert wird.

4. Inneneinheit (20) nach Anspruch 3, wobei die Formbegrenzung es dem Handapparat (22) erlaubt, sich in Richtung der Achse a zu bewegen, wenn der Handapparat (22) in dem Sitz (32) platziert wird.

5. Inneneinheit (20) nach einem oder mehreren der vorhergehenden Ansprüche, wobei die Wechselwirkung zwischen dem magnetisch aktiven Element (34) der Basis (26) und dem magnetisch aktiven Element (24) des Handapparates (22) geeignet ist, den Handapparat (22) bezüglich der Basis (26) in die Richtung der Annäherung/Entfernung des Handapparates (22) zu zwingen, wenn der Handapparat (22) in dem Sitz (32) platziert wird.

6. Inneneinheit (20) nach einem oder mehreren der vorhergehenden Ansprüche, wobei das magnetisch aktive Element (34) der Basis (26) zum mechanischen Einwirken auf den Schalter (28) eingerichtet ist.

7. Inneneinheit (20) nach einem oder mehreren der vorhergehenden Ansprüche, wobei das magnetisch aktive Element (34) der Basis (26) dazu eingerichtet ist, sich aufgrund einer Wechselwirkung mit einem zweiten magnetisch aktiven Element außerhalb der Basis (26) zu bewegen.

8. Inneneinheit (20) nach einem oder mehreren der vorhergehenden Ansprüche, wobei das magnetisch aktive Element (34) der Basis (26) durch die Zwischenschaltung eines kinematischen Mechanismus (46) auf den Schalter (28) wirkt.

9. Gegensprechanlage (100) mit mindestens einer Außeneinheit (60) und mindestens einer Inneneinheit (20) nach einem oder mehreren der vorhergehenden Ansprüche.

## Revendications

1. - Unité intérieure (20) pour un système d'interphone (100), comprenant :
- un combiné (22) comprenant un élément magnétiquement actif (24) ; et
- une base (26) comprenant un interrupteur (28) pour ouvrir/fermer un circuit de communication (30), la base (26) définissant un siège (32) configuré pour recevoir le combiné (22), dans laquelle :
- le siège (32) comprend un élément magnétiquement actif (34) disposé au niveau de l'élément magnétiquement actif (24) du combiné (22) lorsque le combiné (22) est placé dans le siège (32) ;
l'élément magnétiquement actif (34) de la base (26) étant mobile entre deux positions et étant configuré pour ouvrir/fermer l'interrupteur (28) ; et
l'interaction entre l'élément magnétiquement actif (34) de la base (26) et l'élément magnétiquement actif (24) du combiné (22) étant apte à contraindre le combiné (22) dans son siège (32) .

2. - Unité intérieure (20) selon la revendication 1, dans laquelle le siège (32) est configuré pour recevoir le combiné (22) dans une position prédéfinie.

3. - Unité intérieure (20) selon la revendication 1 ou 2, dans laquelle le siège (32) :
- définit un axe longitudinal 1, un axe transversal t et un axe a d'approche/retrait du combiné (22), 1, t et a étant perpendiculaires les uns aux autres ; et
- définit une contrainte de forme empêchant le combiné (22) de se déplacer en translation dans les directions des axes 1 et t, lorsque le combiné (22) est placé dans le siège (32).

4. - Unité intérieure (20) selon la revendication 3, dans laquelle la contrainte de forme permet au combiné (22) de se déplacer en translation dans la direction de l'axe a, lorsque le combiné (22) est placé dans le siège (32).

5. - Unité intérieure (20) selon l'une ou plusieurs des revendications précédentes, dans laquelle l'interaction entre l'élément magnétiquement actif (34) de la base (26) et l'élément magnétiquement actif (24) du combiné (22) est apte à contraindre le combiné (22) dans la direction d'approche/retrait du combiné (22) par rapport à la base (26), lorsque le combiné (22) est placé dans le siège (32).

6. - Unité intérieure (20) selon l'une ou plusieurs des revendications précédentes, dans laquelle l'élément magnétiquement actif (34) de la base (26) est configuré pour agir mécaniquement sur l'interrupteur (28).

7. - Unité intérieure (20) selon l'une ou plusieurs des revendications précédentes, dans laquelle l'élément magnétiquement actif (34) de la base (26) est configuré pour se déplacer en raison d'une interaction avec un second élément magnétiquement actif à l'extérieur de la base (26).

8. - Unité intérieure (20) selon l'une ou plusieurs des revendications précédentes, dans laquelle l'élément magnétiquement actif (34) de la base (26) agit sur l'interrupteur (28) par l'interposition d'un mécanisme cinématique (46).

9. - Système d'interphone (100) comprenant au moins une unité extérieure (60) et au moins une unité intérieure (20) selon l'une ou plusieurs des revendications précédentes.
